# EUROPÄISCHE PATENTSCHRIFT

(11) **EP 1 215 164 B1**
(45) Veröffentlichungstag und Bekanntmachung des Hinweises auf die Patenterteilung: **14.07.2004**
(21) Anmeldenummer: 01129864.3
(22) Anmeldetag: 14.12.2001
(51) Int. Cl.: B66F 9/075, B60G 9/02

(54) **Flurförderung mit einer federnd aufgehängten Antriebsachse**
Industrial truck with a resilient suspended driving axle
Chariot de manutention avec un essieu moteur suspendu élastiquement

(30) Priorität: 15.12.2000 DE 10062565
(43) Veröffentlichungstag der Anmeldung: 19.06.2002
(73) Patentinhaber: STILL GMBH, D-22113 Hamburg (DE)
(72) Erfinder: Bavendiek, Rainer, Dr.-Ing., 21465 Wentorf (DE); Biermann, Thorsten, Dipl.-Ing., 22043 Hamburg (DE); Bruns, Rainer, Prof. Dr.-Ing., 22395 Hamburg (DE)
(74) Vertreter: Lang, Michael (DE)

(56) Entgegenhaltungen:
- DE-A- 19 732 400
- DE-B- 1 120 285
- DE-C- 906 045
- DE-U- 1 790 386
- DE-U- 29 710 645
- GB-A- 967 451
- GB-A- 1 427 194
- GB-A- 2 261 411
- US-A- 2 366 378

## Beschreibung

Die Erfindung betrifft ein Flurförderzeug, insbesondere Gegengewichts-Gabelstapler, mit einer frontseitig angeordneten, federnd an einem Fahrzeugrahmen aufgehängten Antriebsachse.

Mit dem Begriff "federnd aufgehängt" soll dabei nicht ausgeschlossen sein, dass durch Blockieren der Federung in bestimmten Betriebszuständen eine starre Aufhängung erzielbar ist.

Flurförderzeuge, wie Gegengewichts-Gabelstapler, weisen ein Fahrwerk auf, das aus einer starr mit dem Fahrzeugrahmen verbundenen, vorderen Antriebsachse und einer pendelnd am Fahrzeugrahmen aufgehängten, hinteren Lenkachse besteht. Dadurch wird ein Stützdreieck gebildet, mit dessen Hilfe das Fahrwerk auf der in vielen Fällen unebenen Fahrbahn statisch bestimmt abgestützt ist. Solche Flurförderzeuge weisen eine gute Standfestigkeit auf. Allerdings werden beim Fahren Schwingungen und Stöße, die aus Fahrbahnunebenheiten resultieren, ungedämpft in das Fahrzeug eingeleitet, wodurch die Umschlagleistung, die Fahrsicherheit und der Fahrkomfort vermindert werden. Es ist daher auch bekannt, gefederte Fahrwerke einzusetzen.

Ein gattungsgemäßes Flurförderzeug mit gefederter Antriebsachse (Vorderachse) ist in der Druckschrift GB 2 261 411 A offenbart. Die Antriebsachse ist dabei mit Hilfe von zwei Längslenkern und zwei Diagonallenkern am Fahrzeugrahmen aufgehängt. Die Längslenker sind in einer gemeinsamen Horizontalebene angeordnet. In einer dazu beabstandeten, zweiten Horizontalebene befinden sich die Diagonallenker, die aufgrund ihrer diagonalen Ausrichtung auf den Achskörper in Fahrzeugquerrichtung wirkende Kräfte aufnehmen. Die Diagonallenker selbst sind nach Art einer Pendelstütze gelagert, so dass sie nur auf Zug bzw. Druck belastet werden. Diese Konstruktion ist einerseits durch die Anzahl der erforderlichen Längs- bzw. Diagonallenker und Gelenklager aufwendig, andererseits sind die Platzverhältnisse im Bereich der Aufhängung der Antriebsachse eingeschränkt. Zur Aufnahme der auf die Antriebsachse einwirkenden Momente sind nämlich die Längs- und Diagonallenker mit größtmöglichem Abstand zueinander angeordnet, wodurch über die gesamte Fahrzeugbreite Bauraum beansprucht wird.

Aus der GB 967 451 als nächstliegendem Stand der Technik ist bekannt, bei einem Seitenhubstapler die beiden Achsschenkel einer Antriebsachse über winkelförmige Schwenklager jeweils an einer Längsschwinge zu befesügen, die um eine Fahrzeugquerachse schwenkbar ist. Die Längsschwingen sind dazu in Schwenklagern schwenkbar gelagert, welche fest mit einem Rahmenblech verbunden sind. Die Achsschenkel sind weiterhin an einer zentralen Lagervorrichtung angebracht, die in einer Lagerhülse geführt wird und ein Verschwenken der Achse als Ganzes um die Fahrzeuglängsachse ermöglicht. Die Lagerhülse ist fest mit dem Rahmenblech des Fahrzeugrahmens verbunden und daher die Lagervorrichtung nicht um die Fahrzeugquerachse verschwenkbar. Die Lagervorrichtung bildet zudem ein von den Längsschwingen getrenntes Bauelement. Dadurch besitzt die Achskonstruktion einen sehr großen Platzbedarf und ist nur mit großem Aufwand zu fertigen.

Der vorliegenden Erfindung liegt die Aufgabe zu Grunde, ein Flurförderzeug der eingangs genannten Art zur Verfügung zu stellen, das einen verringerten Bauaufwand und verbesserte Platzverhältnisse im Bereich der Aufhängung der Antriebsachse aufweist.

Diese Aufgabe wird erfindungsgemäß dadurch gelöst, dass die Antriebsachse an einer Längsschwinge befestigt ist, die zusammen mit der Antriebsachse um eine Fahrzeug-Querachse schwenkbar ist und in die eine Führung integriert ist, die einen rotatorischen Freiheitsgrad in Bezug auf eine Fahrzeug-Längsachse aufweist.

Die Aufhängung der Antriebsachse des erfindungsgemäßen Flurförderzeugs am Fahrzeugrahmen benötigt demzufolge nur noch eine Lagerung, die eine Bewegung der Antriebsachse um eine Fahrzeug-Querachse ermöglicht, und eine Lagerung, die eine Bewegung der Antriebsachse um eine Fahrzeug-Längsachse erlaubt. Diese platzsparende Art der Aufhängung weist nicht nur wenige Bauteile auf, sondern ist darüber hinaus sehr robust.

Gemäß einer vorteilhaften ersten Ausgestaltung der Erfindung ist die Führung als Drehführung ausgebildet, die eine Statoreinheit und eine relativ dazu um die Fahrzeug-Längsachse drehbare Rotoreinheit aufweist, wobei die Rotoreinheit mit der Antriebsachse und die Statoreinheit mit dem Fahrzeugrahmen verbunden ist.

Hierbei kann die Statoreinheit mittels eines Gelenks, durch das sich die Fahrzeug-Querachse erstreckt, mit dem Fahrzeugrahmen verbunden sein.

Das Gelenk kann in der üblichen Weise ausgebildet sein und z. B. einen die Statoreinheit durchdringenden Querzapfen aufweisen, dessen Mittellinie koaxial mit der Fahrzeug-Querachse ist und der in zwei seitlichen Lagerböcken abgestützt ist, die mit dem Fahrzeugrahmen verbunden sind.

Es ist aber auch möglich, dass die Statoreinheit mittels eines um die Fahrzeug-Querachse verformbaren, biegeelastischen Bauteils mit dem Fahrzeugrahmen verbunden ist.

Im letztgenannten Fall erweist es sich als günstig, wenn das biegeelastische Bauteil als Blattfeder ausgebildet ist, dessen Federsteifigkeit in Bezug auf eine Biegung um die Fahrzeug-Querachse relativ zu Biegungen um andere Achsen herabgesetzt ist.

Eine bezüglich eines geringen Bauaufwands günstige Ausführung der Drehführung sieht vor, dass die Rotoreinheit eine hohlzylindrische Ausnehmung aufweist, in der ein zylindrischer Zapfen der Statoreinheit gelagert ist.

In Umkehr dieses Prinzips ist es jedoch auch möglich, dass die Rotoreinheit einen zylindrischer Zapfen aufweist, der in einer hohlzylindrischen Ausnehmung der Statoreinheit gelagert ist.

Anstelle einer in die Längsschwinge integrierten Drehführung kann die Führung als zwischen der Antriebsachse und der Längsschwinge angeordnetes Gelenk mit drei senkrecht zueinander stehenden Freiheitsgraden, insbesondere Kugelgelenk, ausgebildet sein, wobei die Antriebsachse im Bereich der Achsenden jeweils durch eine Pendelstütze mit dem Fahrzeugrahmen verbunden ist und die Pendelstützen an beiden Enden jeweils ein Kugelgelenk aufweisen. Die Pendelstützen übertragen lediglich Zug- und Druckkräfte.

Für alle Ausführungsvarianten ist es günstig, wenn die Antriebsachse im Bereich der Achsenden jeweils mittels eines Feder-Dämpfer-Elements am Fahrzeugrahmen und/oder einem mit dem Fahrzeugrahmen verbundenen Stützrahmen abgestützt ist. Die beiden Feder-Dämpfer-Elemente, die zur Abstützung von Vertikalkräften zwingend erforderlich sind, ermöglichen es in Kombination mit den bereits beschriebenen Komponenten der Achsaufhängung, dass sich die Räder der Antriebsachse in vertikaler Richtung unabhängig voneinander bewegen können.

Sofern jeweils das Feder-Dämpfer-Element blockierbar, insbesondere hydraulisch blockierbar ist, kann unter bestimmten Betriebsbedingungen die Standsicherheit des erfindungsgemäßen Flurförderzeugs erhöht werden, indem die Feder-Dämpfer-Funktion abgeschaltet wird und somit die Antriebsachse in einer bestimmten Stellung fixiert wird.

Gemäß einer zweckmäßigen Ausgestaltung kann das Feder-Dämpfer-Element längenverstellbar, insbesondere hydraulisch längenverstellbar sein. Dadurch kann das Fahrzeugniveau geregelt werden.

Günstig ist es femer, wenn die Federsteifigkeit und/oder die Dämpfungskonstante des Feder-Dämpfer-Elements einstellbar ist. Durch Änderung dieser beiden Parameter kann das Feder-Dämpfer-Element an den jeweiligen Fahr- und Beladungszustand des Flurförderzeugs angepasst werden.

Weitere Vorteile und Einzelheiten der Erfindung werden anhand der in den schematischen Figuren dargestellten Ausführungsbeispiele näher erläutert. Dabei zeigt
- Figur 1: eine perspektivische Ansicht des frontseitigen Rahmenabschnitts eines erfindungsgemäßen Flurförderzeugs,
- Figur 2: eine perspektivische Ansicht des frontseitigen Rahmenabschnitts einer ersten Variante des erfindungsgemäßen Flurförderzeugs,
- Figur 3: eine perspektivische Ansicht des frontseitigen Rahmenabschnitts einer zweiten Variante des erfindungsgemäßen Flurförderzeugs und
- Figur 4: eine perspektivische Ansicht des frontseitigen Rahmenabschnitts einer dritten Variante des erfindungsgemäßen Flurförderzeugs.

Das erfindungsgemäße Flurförderzeug ist bevorzugt als Gegengewichts-Gabelstapler ausgebildet, der einen Fahrzeugrahmen 1 und eine frontseitige Antriebsachse 2 aufweist, an deren Achsenden jeweils ein Rad 3 angeordnet ist, von denen in den Figuren nur eines dargestellt ist. Die Antriebsachse 2 ist in den vorliegenden Ausführungsbeispielen als Elektroachse ausgebildet, die einen mittig angeordneten Elektromotor 4 und ein nachgeschaltetetes Differentialgetriebe 5 umfasst. An beiden Achsenden ist jeweils eine Radnabe 6 bzw. 7 befestigt, die von einer Abtriebswelle des Differentialgetriebes 5 angetrieben wird und in der ein Untersetzungsgetriebe und/oder eine Bremse angeordnet sein kann. Selbstverständlich sind auch andere Bauprinzipien der Antriebsachse 2 möglich, beispielsweise solche mit einem oder zwei Hydromotoren.

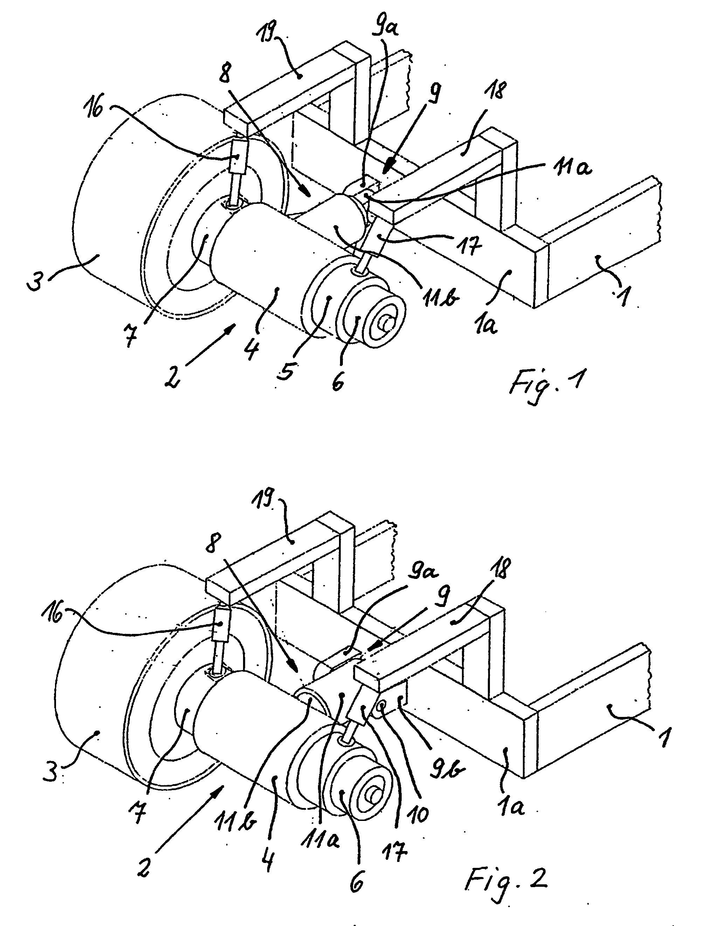

Die Antriebsachse 2 an einer zentral angeordneten Längsschwinge 8 befestigt, die mit einer Aufnahme 1a des Fahrzeugrahmens 1 so verbunden ist, dass die Längsschwinge 8 samt Antriebsachse 2 um eine Fahrzeug-Querachse schwenken kann. Zu diesem Zweck ist in dem Ausführungsbeispiel nach Figur 1 die Längsschwinge 8 mittels eines Gelenks 9 mit der Aufnahme 1a bzw. dem Fahrzeugrahmen 1 verbunden. Das Gelenk 9 besteht aus zwei Lagerböcken 9a und 9b, die mit der Aufnahme 1a verbunden sind, und einem Querzapfen 10, der die Längsschwinge 8 mit den Lagerböcken 9a und 9b gelenkig verbindet und dessen Mittellinie demzufolge die Fahrzeug-Querachse bildet, um den die Längsschwinge 8 und die Antriebsachse 2 schwenkbar sind.

In die Längsschwinge 8 ist in den Ausführungsbeispielen gemäß den Figuren 1, 2 und 3 eine Drehführung integriert. Diese besteht aus einer Statoreinheit 11a und einer Rotoreinheit 11b, die relativ zu der Statoreinheit 11a um eine Fahrzeug-Längsachse drehbar ist Die Statoreinheit 11a stellt dabei den Abschnitt der Längsschwinge 8 dar, der in der oben beschriebenen Weise mit dem Fahrzeugrahmen 1 verbunden ist, während die Rotoreinheit 11 b mit der Antriebsachse 2 verbunden ist.

Im Ausführungsbeispiel nach Figur 1 ist die Statoreinheit 11a als Zapfen ausgebildet, der in eine hohlzylindrische Ausnehmung der Rotoreinheit 11b hineinragt und auf dem die Rotoreinheit 11b drehbar gelagert ist. Das Ausführungsbeispiel nach Figur 2 stellt die Umkehr dieses Prinzips dar: Dabei ist die Rotoreinheit 11b als Zapfen ausgebildet, die in eine hohlzylindrische Ausnehmung der Statoreinheit 11a hineinragt und dort drehbar gelagert ist.

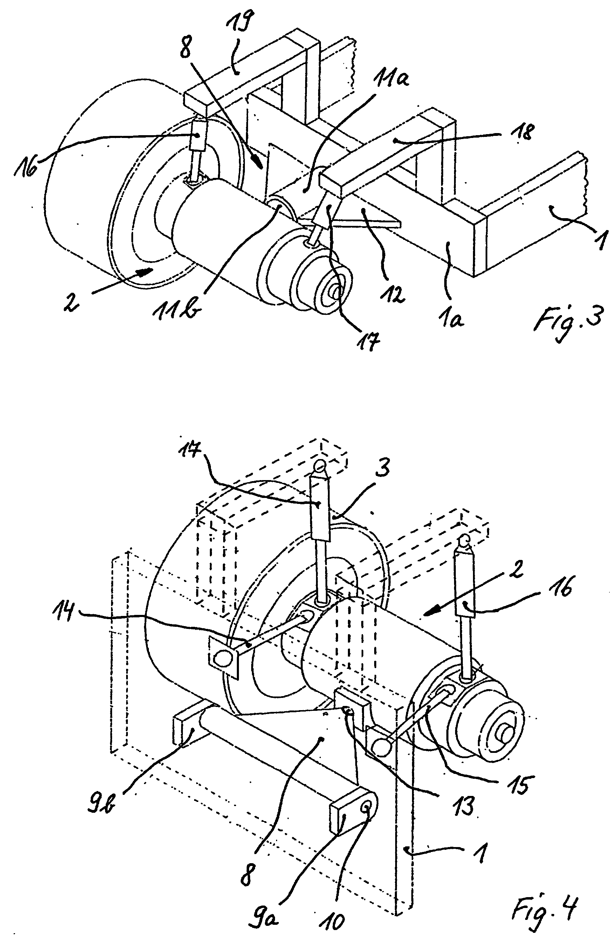

Das Ausführungsbeispiel gemäß Figur 3 unterscheidet sich von den vorhergehenden Ausführungsbeispielen dadurch, dass anstelle einer üblichen Gelenkverbindung zwischen der Längsschwinge 8 und der Aufnahme 1a des Fahrzeugrahmens 1 eine biegeelastische Blattfeder 12 die Längsschwinge 8 mit der Aufnahme 9a verbindet. Dabei ist die Statoreinheit 11a mit der Blattfeder 12 verbunden. Die Federsteifigkeit der Blattfeder 12 ist in Bezug auf eine Biegung um die Fahrzeug-Querachse relativ zu Biegungen um andere Achsen deutlich herabgesetzt, um eine elastische Verformung um die Fahrzeug-Querachse zu ermöglichen.

In dem Ausführungsbeispiel nach Figur 4 ist anstelle einer in die Längsschwinge 8 integrierten Drehführung ein zwischen der Antriebsachse 2 und der Längsschwinge 8 angeordnetes Kugelgelenk 13 in Kombination mit zwei Pendelstützen 14 und 15 vorgesehen, deren Enden mittels Kugelgelenken mit der Antriebsachse 2 bzw. dem Fahrzeugrahmen 1 verbunden sind. Das Kugelgelenk 13 kann konstruktiv auch als Kombination aus einem Dreh- oder Kardangelenk und dementsprechend einem oder zwei um die zu den Gelenkdrehachsen orthogonal ausgerichteten Drehachsen drehelastischen Element(en) ausgeführt werden. Die Anordnung der Drehachsen sollte so erfolgen, dass die Ausführung größerer Drehbewegungen um die Drehachse der Gelenke erfolgt. Grundsätzlich müssen jedoch drei senkrecht zueinander stehende Drehfreiheitsgrade vorhanden sein, damit ein Verklemmen des Mechanismus verhindert wird.

Zur Aufnahme von auf die Antriebsachse 2 bzw. die Räder 3 einwirkenden Vertikalkräften ist die Antriebsachse 2 in allen Ausführungsbeispielen an den Achsenden mittels jeweils eines Feder-Dämpfer-Elements 16 bzw. 17 an einem Stützrahmen 18 bzw. 19 abgestützt, der an der Aufnahme 1a des Fahrzeugrahmens 1 befestigt ist. Selbstverständlich ist es auch möglich, die Stützrahmen 18, 19 zusätzlich oder alternativ an anderen geeigneten Stellen des Fahrzeugrahmens 1 zu befestigen.

Die Feder-Dämpfer-Elemente 16, 17 können blockierbar und/oder längenverstellbar sein. Darüber hinaus ist es möglich, die Federsteifigkeit und/oder die Dämpfungskonstante einstellbar auszuführen.

## Patentansprüche

1. Flurförderzeug, insbesondere Gegengewichts-Gabelstapler, mit einer frontseitig angeordneten, federnd an einem Fahrzeugrahmen (1) aufgehängten Antriebsachse (2), **dadurch gekennzeichnet, dass** die Antriebsachse (2) an nur einer Längsschwinge (8) befestigt ist, die zusammen mit der Antriebsachse (2) um eine Fahrzeug-Querachse schwenkbar ist und in die eine Führung (11a,11b) integriert ist, die einen rotatorischen Freiheitsgrad in Bezug auf eine Fahrzeug-Längsachse aufweist.

2. Flurförderzeug nach Anspruch 1, **dadurch gekennzeichnet, dass** die Führung als Drehführung ausgebildet ist, die eine Statoreinheit (11a) und eine relativ dazu um die Fahrzeug-Längsachse drehbare Rotoreinheit (11b) aufweist, wobei die Rotoreinheit (11b) mit der Antriebsachse (2) und die Statoreinheit (11a) mit dem Fahrzeugrahmen (1) verbunden ist.

3. Flurförderzeug nach Anspruch 2, **dadurch gekennzeichnet, dass** die Statoreinheit (11a) mittels eines Gelenks (9), durch das sich die Fahrzeug-Querachse erstreckt, mit dem Fahrzeugrahmen (1) verbunden ist.

4. Flurförderzeug nach Anspruch 2, **dadurch gekennzeichnet, dass** die Statoreinheit (11a) mittels eines um die Fahrzeug-Querachse verformbaren, biegeelastischen Bauteils mit dem Fahrzeugrahmen (1) verbunden ist.

5. Flurförderzeug nach Anspruch 4, **dadurch gekennzeichnet, dass** das biegeelastische Bauteil als Blattfeder (12) ausgebildet ist, dessen Federsteifigkeit in Bezug auf eine Biegung um die Fahrzeug-Querachse relativ zu Biegungen um andere Achsen herabgesetzt ist.

6. Flurförderzeug nach einem der Ansprüche 2 bis 5, **dadurch gekennzeichnet, dass** die Rotoreinheit (11b) eine hohlzylindrische Ausnehmung aufweist, in der ein zylindrischer Zapfen der Statoreinheit (11a) gelagert ist.

7. Flurförderzeug nach einem der Ansprüche 2 bis 5, **dadurch gekennzeichnet, dass** die Rotoreinheit (11b) einen zylindrischen Zapfen aufweist, der in einer hohlzylindrischen Ausnehmung der Statoreinheit (11a) gelagert ist.

8. Flurförderzeug nach Anspruch 1, **dadurch gekennzeichnet, dass** die Führung als zwischen der Antriebsachse (2) und der Längsschwinge (8) angeordnetes Gelenk mit drei senkrecht zueinander stehenden Drehfreiheitsgraden, insbesondere Kugelgelenk (13), ausgebildet ist, wobei die Antriebsachse (2) im Bereich der Achsenden jeweils durch eine Pendelstütze (14; 15) mit dem Fahrzeugrahmen (1) verbunden ist und die Pendelstützen (14, 15) an beiden Enden jeweils ein Kugelgelenk aufweisen.

9. Flurförderzeug nach einem der Ansprüche 1 bis 8, **dadurch gekennzeichnet, dass** die Antriebsachse (2) im Bereich der Achsenden jeweils mittels eines Feder-Dämpfer-Elements (16; 17) am Fahrzeugrahmen (1) und/oder einem mit dem Fahrzeugrahmen (1) verbundenen Stützrahmen (18; 19) abgestützt ist.

10. Flurförderzeug nach Anspruch 9, **dadurch gekennzeichnet, dass** das Feder-Dämpfer-Element (16; 17) blockierbar, insbesondere hydraulisch blockierbar ist.

11. Flurförderzeug nach Anspruch 9 oder 10, **dadurch gekennzeichnet, dass** das Feder-Dämpfer-Element (16; 17) längenverstellbar, insbesondere hydraulisch längenverstellbar ist.

12. Flurförderzeug nach einem der Ansprüche 9 bis 11, **dadurch gekennzeichnet, dass** die Federsteifigkeit und/oder die Dämpfungskonstante des Feder-Dämpfer-Elements (16; 17) einstellbar ist.

## Claims

1. Industrial truck, in particular a counterbalanced fork-lift truck, having a drive axle (2) which is arranged on the front side and is suspended in a sprung manner on a truck frame (1), **characterized in that** the drive axle (2) is fixed to only one longitudinal swinging arm (8) which, together with the drive axle (2), can be pivoted about a truck transverse axis and into which there is integrated a guide (11a, 11b) which has a degree of rotational freedom in relation to a truck longitudinal axis.

2. Industrial truck according to Claim 1, **characterized in that** the guide is designed as a rotary guide, which has a stator unit (11a) and a rotor unit (11b) which can be rotated relative thereto about the truck longitudinal axis, the rotor unit (11b) being connected to the drive axle (2) and the stator unit (11a) being connected to the truck frame (1).

3. Industrial truck according to Claim 2, **characterized in that** the stator unit (11a) is connected to the truck frame (1) by means of a joint (9) through which the truck transverse axis extends.

4. Industrial truck according to Claim 2, **characterized in that** the stator unit (11a) is connected to the truck frame (1) by means of a resilient component which can be deformed about the truck transverse axis.

5. Industrial truck according to Claim 4, **characterized in that** the resilient component is formed as a leaf spring (12), whose spring stiffness in relation to bending about the truck transverse axis is reduced relative to bending about other axes.

6. Industrial truck according to one of Claims 2 to 5, **characterized in that** the rotor unit (11b) has a hollow cylindrical recess in which a cylindrical pin belonging to the stator unit (11a) is mounted.

7. Industrial truck according to one of Claims 2 to 5, **characterized in that** the rotor unit (11b) has a cylindrical pin which is mounted in a hollow cylindrical recess in the stator unit (11a).

8. Industrial truck according to Claim 1, **characterized in that** the guide is formed as a joint arranged between the drive axle (2) and the longitudinal swinging arm (8) and having three degrees of rotational freedom at right angles to one another, in particular a spherical joint (13), the drive axle (2) in the region of the axle ends being connected to the truck frame (1) in each case by a self-aligning support (14; 15), and the self-aligning supports (14, 15) each having a spherical joint at both ends.

9. Industrial truck according to one of Claims 1 to 8, **characterized in that** the drive axle (2) in the region of the axle ends is in each case supported on the truck frame (1) by means of a spring-damper element (16; 17) and/or a supporting frame (18; 19) connected to the truck frame (1).

10. Industrial truck according to Claim 9, **characterized in that** the spring-damper element (16; 17) can be blocked, in particular blocked hydraulically.

11. Industrial truck according to Claim 9 or 10, **characterized in that** the length of the spring-damper element (16; 17) can be adjusted, in particular adjusted hydraulically.

12. Industrial truck according to one of Claims 9 to 11, **characterized in that** the spring stiffness and/or the damping constant of the spring-damper element (16; 17) are/is adjustable.

## Revendications

1. Chariot de manutention, notamment chariot élévateur à fourche à contrepoids, comprenant un essieu moteur (2) disposé du côté frontal, suspendu élastiquement sur un châssis du véhicule (1), **caractérisé en ce que** l'essieu moteur (2) est fixé à seulement une bielle longitudinale (8) qui peut pivoter conjointement avec l'essieu moteur (2) autour d'un axe transversal du véhicule et qui est intégrée dans une coulisse (11a, 11b) qui présente un degré de liberté en rotation par rapport à un axe longitudinal du véhicule.

2. Chariot de manutention selon la revendication 1, **caractérisé en ce que** la coulisse est réalisée sous forme de coulisse rotative qui présente une unité de stator (11a) et une unité de rotor (11b) pouvant tourner par rapport à celle-ci autour de l'axe longitudinal du véhicule, l'unité de rotor (11b) étant connectée à l'essieu moteur (2) et l'unité de stator (11a) étant connectée au châssis du véhicule (1).

3. Chariot de manutention selon la revendication 2, **caractérisé en ce que** l'unité de stator (11a) est connectée au châssis du véhicule (1) au moyen d'une articulation (9) qui s'étend à travers l'axe transversal du véhicule.

4. Chariot de manutention selon la revendication 2, **caractérisé en ce que** l'unité de stator (11a) est connectée au châssis du véhicule (1) au moyen d'un composant flexible élastique déformable autour de l'axe transversal du véhicule.

5. Chariot de manutention selon la revendication 4, **caractérisé en ce que** le composant flexible élastique est réalisé sous forme de ressort à lame (12) dont la raideur de ressort peut être abaissée en fonction d'une flexion autour de l'axe transversal du véhicule par rapport à des flexions autour d'autres axes.

6. Chariot de manutention selon l'une quelconque des revendications 2 à 5, **caractérisé en ce que** l'unité de rotor (11b) présente un évidement cylindrique creux dans lequel est montée un tourillon cylindrique de l'unité de stator (11a).

7. Chariot de manutention selon l'une quelconque des revendications 2 à 5, **caractérisé en ce que** l'unité de rotor (11b) présente un tourillon cylindrique qui est monté dans un évidement cylindrique creux de l'unité de stator (11a).

8. Chariot de manutention selon la revendication 1, **caractérisé en ce que** la coulisse est réalisée sous forme d'articulation disposée entre l'essieu moteur (2) et la bielle longitudinale (8), avec trois degrés de liberté en rotation perpendiculaires les uns aux autres, notamment sous forme d'une articulation à rotule (13), l'essieu moteur (2) étant connecté dans la région des extrémités de l'essieu à chaque fois par un support pendulaire (14 ; 15) au châssis du véhicule (1) et les supports pendulaires (14, 15) présentant aux deux extrémités à chaque fois une articulation à rotule.

9. Chariot de manutention selon l'une quelconque des revendications 1 à 8, **caractérisé en ce que** l'essieu moteur (2) est supporté dans la région des extrémités d'essieu à chaque fois au moyen d'un élément amortisseur à ressort (16 ; 17) sur le châssis du véhicule (1) et/ou sur un châssis de support (18 ; 19) connecté au châssis du véhicule (1).

10. Chariot de manutention selon la revendication 9, **caractérisé en ce que** l'élément amortisseur à ressort (16 ; 17) peut être bloqué, notamment de manière hydraulique.

11. Chariot de manutention selon la revendication 9 ou 10, **caractérisé en ce que** l'élément amortisseur à ressort (16 ; 17) peut être ajusté en longueur, notamment de manière hydraulique.

12. Chariot de manutention selon l'une quelconque des revendications 9 à 11, **caractérisé en ce que** la raideur de ressort et/ou la constante d'amortissement de l'élément amortisseur à ressort (16 ; 17) peut être ajustée.
